# EUROPEAN PATENT SPECIFICATION

(11) **EP 3 887 463 B1**
(45) Date of publication and mention of the grant of the patent: **13.09.2023**
(21) Application number: 19892623.0
(22) Date of filing: 04.12.2019
(51) Int. Cl.: C09D 11/52, C23C 18/31, C23C 18/14, C30B 7/06, C09D 5/24, C09D 11/101, C09D 1/00, C09D 11/033, C09D 11/037, C09D 11/322, C09D 11/36, C23C 18/08

(54) **COMPOSITION FOR FORMING A PATTERNED METAL FILM ON A SUBSTRATE**
VERFAHREN ZUR BILDUNG EINES STRUKTURIERTEN METALLFILMS AUF EINEM SUBSTRAT
COUCHES MÉTALLIQUES CONDUCTRICES TRANSPARENTES

(30) Priority: 07.12.2018 US 201862776627 P
(43) Date of publication of application: 06.10.2021
(73) Proprietor: Oreltech Ltd., 961001 Rehovot (IL)
(72) Inventor: ZAMOSHCHIK, Natalia, 961001 Rehovot (IL); LIVANOV, Konstantin, 961001 Rehovot (IL)
(74) Representative: Harrison, Robert John
(86) International application number: PCT/IB2019/060441
(87) International publication number: WO 2020/115680

(56) References cited:
- WO-A1-2018/049322
- WO-A1-2018/049322
- WO-A1-2018/140430
- WO-A1-2018/140430
- US-A1- 2007 184 208
- US-A1- 2007 184 208
- US-A1- 2008 206 488
- US-A1- 2016 302 305
- US-A1- 2017 218 218
- US-A1- 2018 297 387

## Description

### CROSS-REFERENCE TO RELATED APPLICATIONS

This application claims the benefit of US Provisional Application No. 62/776,627 filed on December 07, 2018.

### TECHNICAL FIELD

The present disclosure relates generally to properties and methods for the formation of transparent conductive metal layers (TCML) on various surfaces using plasma.

### BACKGROUND

A number of patent applications are known which teach methods for growing a transparent conductive metal layer on a substrate. For example, International Patent Application No. WO 2018/049322 teaches a method for forming a metal active component in a hybrid material. The method includes applying a metal precursor formulation on a substrate and exposing the metal precursor formulation applied on the substrate to a low-energy plasma. The low-energy plasma is operated according to a set of exposure parameters.

International Patent Application No. WO 2018/140430 teaches a method for forming a crystalline metal layer on a three-dimensional (3D) substrate. The method of WO 2018/140430 comprises a step of applying a crystal growth ink to a surface of the 3D substrate. The crystal growth ink comprises a metal ionic precursor and a structuring liquid. The method further comprises a step of exposing the 3D substrate to plasma irradiation in a vacuum chamber to cause the growing of a crystalline metal layer on the 3D substrate.

US Patent Application No. US 2017/0218218 relates to an ink composition for forming a patterned thin metal film on a substrate. The ink composition comprises metal cations and at least one solvent. US 2017/0218218 further discloses the patterned thin metal film is adhered to a surface of the substrate upon exposure of the metal cations to a low-energy plasma.

US Patent Application No. US 2018/297387 relates to a method for directly writing metal traces on a wide range of substrate materials. The method of US 2018/297387 comprises a step of writing a pattern of particle-free metal-salt-based ink on the substrate material. The method further comprises a plasma-based treatment to remove non-metallic components of the ink and to decompose the metal salt into a pure metal.

A method for depositing metals, metal blends and alloys onto substrate surfaces is described in US Patent Application No. US 2007/184208. The method in US 2007/184208 discloses a step of selecting a porous substrate having open voids exposed to a surface of the porous substrate. The method further comprises selecting a precursor selected from a monomer or a comonomer and having a metallic component. A solution comprising the precursor dissolved in a liquid solvent is coated on the porous substrate. The method further comprises the removal of the liquid solvent, enabling the formation of a porous substrate coated with a dry deposit. The coated substrate is then introduced into a plasma reaction chamber comprising spaced apart electrodes. Radio frequency (RF) energy is applied across the electrodes, resulting in the formation of a plasma glow in the plasma reaction chamber. Simultaneously, a plasma supporting gas is introduced into the plasma reaction chamber. The plasma glow leads to a conversion of the precursor to a dissociated form, enabling the formation of a deposit comprising the metallic component in elemental form as a cohesive film on the substrate surface.

Conductive transparent films are a necessary component in many applications, including lighting, displays, solar cells, touchscreens and others. Currently, the field is dominated by Indium tin oxide (ITO) coatings that have high material costs, complicated application methods and limiting properties. Conventional fabrication techniques typically involve magnetron sputtering of the film, which is a very inefficient process with only a fraction of planar target material available for deposition on the substrate. Moreover, the target material used for sputtering is very expensive.

More importantly, the industrial sputter deposition process of transparent conductive oxides is a great challenge because film thickness, optical properties, and electrical properties have to be distributed uniformly over a large substrate size at the same time. Optimum resistivity and transmittance cannot be reached at the same time and often the process control is very challenging and the parameters of the power supply alone are not suitable to control this process, resulting in a very narrow process window. The very narrow process window can also be an obstacle if large area uniformity is required. It is very difficult to adjust all process parameters such as partial pressures, pumping speed, magnetic field, and oxidation state to achieve uniformity along a large target.

It would therefore be advantageous to provide a solution that would overcome the challenges noted above by providing a process of forming a transparent conducting thin film, which is inexpensive, uniform, easy to implement and results in an optimum resistivity and transmittance of the film.

### SUMMARY

The invention is defined by the method of claim 1. A method for growing a transparent conductive metal layer on a substrate is taught in this disclosure. The method comprises the steps of activating the substrate using plasma irradiation for a predetermined amount of time, followed by applying crystal growth ink to a surface of the substrate, wherein the crystal growth ink includes a metal ionic precursor. The substrate is a PET substrate. The crystal growth ink comprises a structuring liquid component and a spreading liquid component, both of which are an organic solvent or a combination of organic solvents. The method further comprises a step of exposing the substrate to plasma irradiation to cause the growing of the transparent conductive metal layer comprised of a crystalline metal framework on the substrate, wherein the exposure is based on a set of predefined exposure parameters. The set of predefined exposure parameters comprises RF frequency of 13.56 MHz, 150 W of power, and 30 SCCM gas flow rate. The metal ionic precursor is silver nitrate with a concentration of 5 wt. % of the crystal growth ink. The formed conductive metal layer has a resistivity of 4 ohm/sq and transparency of 50%. The crystalline metal framework comprises large crystalline metal dendritic flakes each having a crystal node in the center.

Alternatively, the set of predefined exposure parameters comprises RF frequency of 40 kHz, 150 W of power, and 30 SCCM gas flow rate. The metal ionic precursor is silver nitrate with a concentration of 3.5 wt. % of the crystal growth ink. The formed conductive metal layer has a resistivity of 15 ohm/sq and transparency of 80%. The crystalline metal framework comprises a randomized interconnected network of metal nanocrystals. The set of predefined exposure parameters may comprise for example an exposure to plasma at a pressure ranging from atmospheric of 1×10⁵ Pa to medium vacuum of 1×10⁻¹ Pa.

The crystal growth ink comprises for example the metal ionic precursor at a concentration between 0.01% and 20% by weight of the crystal growth ink. The crystal growth ink may further be any one of: a solution, a dispersion, a suspension, a gel, and a colloid.

The metal ionic precursor may comprise a mixture of salts including one or more metal cations and counterions. The metal cations are stabilized for example by any one of a counterion and a ligand, wherein the stabilized metal cations form in one aspect an organometallic complex, such that the resulting salt is connected by coordinate bonds rather than by ionic bonds.

In one non-limiting aspect, the metal cations are an organic or inorganic salt of Ag, Au, Pt, Pd, Cu, Ni, Co, Zn, In, Ti, V, Mn, Fe, Cr, Zr, Nb, Mo, W, Ru, Rh, Ca, Re, Os, Ir, Al, Ga, Sn, Sb, and combination thereof.

The counterions of the metal ionic precursor are for example selected from the group consisting of: M(NO3)n, M(SO4)n, MCln, HmMCln+m, and MN, where "M" is a metal atom, or metal alloy, with a valence of "n", H is hydrogen, NO3 is nitrate, SO4 is sulfate, CI is chloride, "N" is alkyl-, alyl-, aceto-, carbonyl, carboxyl, cyclopentadienyl, phenyl-, biphenyl-, pyridine-, bipyridine-, aromatic, cyano-, amide and other organic moieties, and "m" is a valence of the counterion.

The crystal growth ink comprises for example one or more solvents at a concentration between 80% and 99.99% by weight of the liquid part of the ink.

The structuring liquid component has for example a dynamic viscosity parameter, between 20 and 100 mPa·s (20 and 100 centipoise (cP)). The structuring liquid component comprises for example any one or combination of: cyclic alcohols, sulfoxides, formamides, ethylamines, diols, glycols, glycol ethers, glycerol, propylene carbonate, and their derivatives. The spreading liquid component has in a further example a surface tension between 10 and 40 millinewtons per meter (mN/m).
A transparent conductive metal film grown on a substrate using the method for growing a transparent conductive metal layer on a substrate is also disclosed.

### BRIEF DESCRIPTION OF THE DRAWINGS

The subject matter that is regarded as the invention is particularly pointed out and distinctly claimed in the claims at the conclusion of the specification. The foregoing and other objects, features, and advantages of the disclosed embodiments will be apparent from the following detailed description taken in conjunction with the accompanying drawings.
Fig. 1 is an optical microphotograph of an example of a transparent conductive metal layer, showing interconnected crystalline metal dendritic "flakes" according to an embodiment.
Fig. 2 is an optical microphotograph from Figure 1, where stars represent crystal nodes inside the "flakes".
Fig. 3 is an optical microphotograph from Figure 1, where long dashed lines represent main branches inside the "flakes".
Fig. 4 is an optical microphotograph from Figure 1, where short dashed lines represent borders of the "flakes".
Fig. 5 is an optical microphotograph from Figure 1, where short dashed lines represent borders of the "flakes". "X" signs mark connection points between the "flakes".
Fig. 6 is an optical microphotograph of an example of a single dendritic "flake".
Fig. 7 is an optical microphotograph from Figure 6, where star represents a crystal node of the "flake".
Fig. 8 is an optical microphotograph from Figure 6, where long dashed lines represent main branches inside the "flake".
Fig. 9 is an optical microphotograph from Figure 6, where long dashed lines represent main branches inside the "flake". Dotted lines represent some examples of secondary branches growing from the main branches. Secondary branches may be straight or curved and may grow in any direction.
Fig. 10 is an optical microphotograph from Fig. 6. Short dashed lines represent borders of the "flake".
Fig. 11 is an optical microphotograph from Fig. 6. Short dashed lines represent borders of the "flake". "X" signs mark connection points between the flake in the center and adjacent "flakes".
Fig. 12 is an electron microscopy (SEM) image of an example of a transparent conductive metal layer.
Fig. 13 is an SEM image of an example of a dendritic crystalline "flake" secondary branch.
Fig. 14 is an SEM image of an example of a dendritic crystalline "flake" secondary branch.
Fig. 15 is a SEM image of an example embodiment of a transparent conductive metal layer showing an interconnected crystalline metal "flake" structure, where the flakes cannot be easily distinguished, and the resulting framework looks like a randomized interconnected network of metal nanocrystals.
Fig. 16 is a SEM image of an example of a transparent conductive metal layer showing an interconnected crystalline metal "flake" structure, where the flakes cannot be easily distinguished, and the resulting framework looks like a randomized interconnected network of metal nanocrystals.

### DETAILED DESCRIPTION

lt is important to note that the embodiments disclosed herein are only examples of the many advantageous uses of the innovative teachings herein. In general, statements made in the specification of the present application do not necessarily limit any of the various claimed embodiments. Moreover, some statements may apply to some inventive features but not to others. In general, unless otherwise indicated, singular elements may be in plural and vice versa with no loss of generality. In the drawings, like numerals refer to like parts through several views.

The various disclosed embodiments include a method and process for formation of transparent conductive metal layers (TCML) on a variety of substrates that include planar and 3-dimentional plastic, glass and other substrates. In one embodiment, the substrates are transparent. In another embodiment, the substrates are reflective. The process, disclosed according to an embodiment, includes applying a crystal growth ink to a substrate and exposing the coated substrate to irradiation from plasma. The irradiation causes a reduction process in the crystal growth ink where metal ions within the ink receive electrons from the plasma and are converted to metal atoms, resulting in the formation of a transparent and transparent conductive metal layer on the substrate.

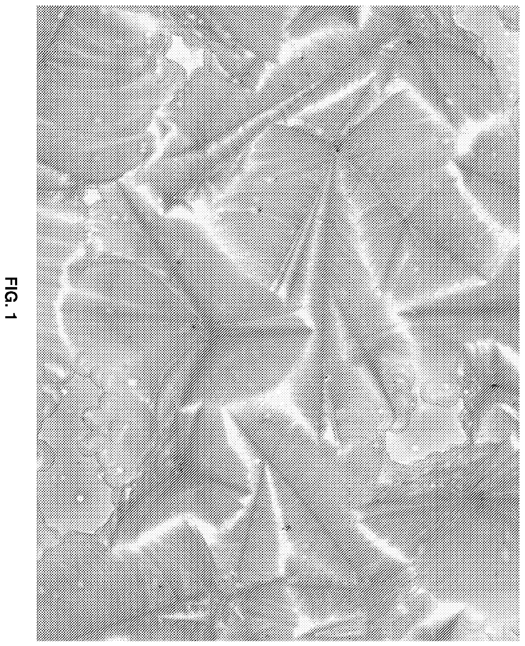

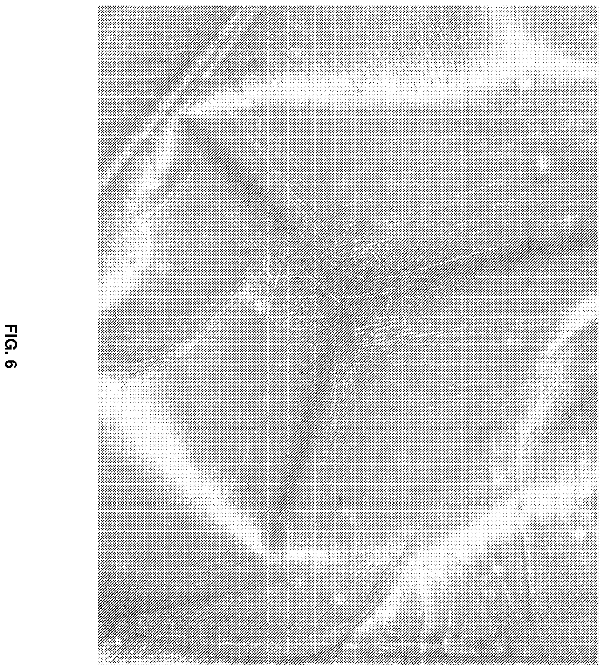

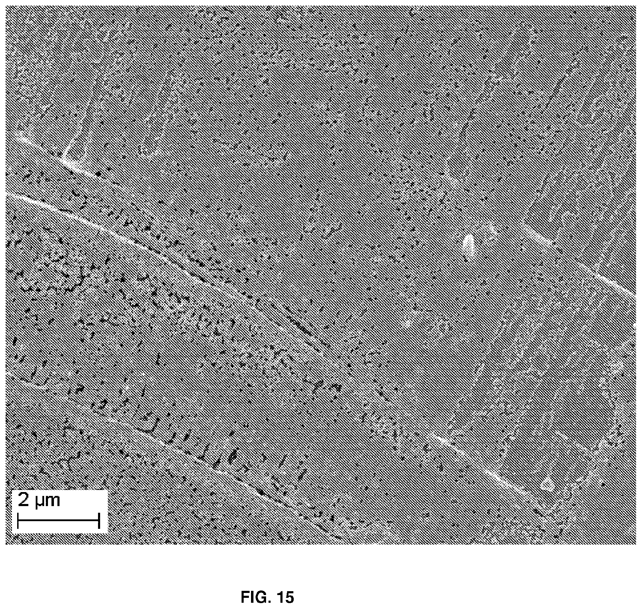

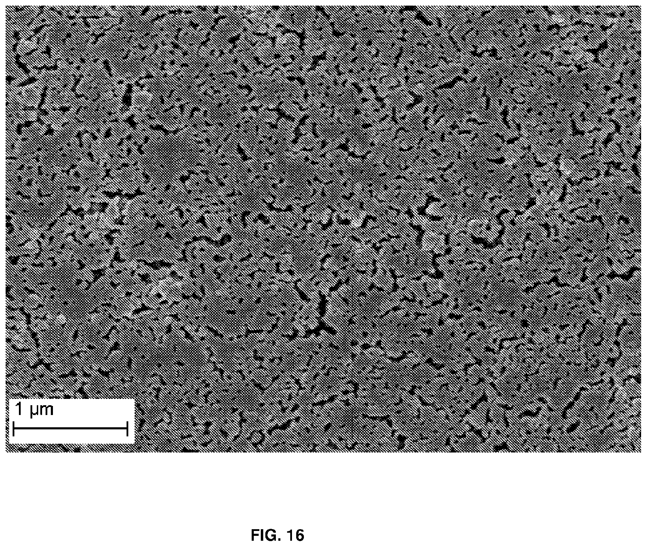

The nature of simultaneous transparency and conductivity of the resulting transparent conductive metal layer is a special arrangement of metal crystals, which form a specific sort of conductive framework. In some embodiments, this framework is simultaneously interconnected enough to provide end-to-end conductivity, and has enough voids to ensure transparency. The metal crystals grow from the crystal growth ink, which can be applied to a surface by a variety of methods. In some embodiments the metal crystals grow in a "flake"-like structure with distinctive characteristics. For example, Fig. 1 shows an optical microphotograph of an example of a transparent conductive metal layer comprised of interconnected crystalline metal dendritic "flakes" according to an embodiment of the present disclosure. Fig. 6 is an example of a single dendritic "flake." In some embodiments the flakes cannot be easily distinguished, and the resulting framework looks like a randomized interconnected network of metal nanocrystals as shown in Figs. 15 and 16.

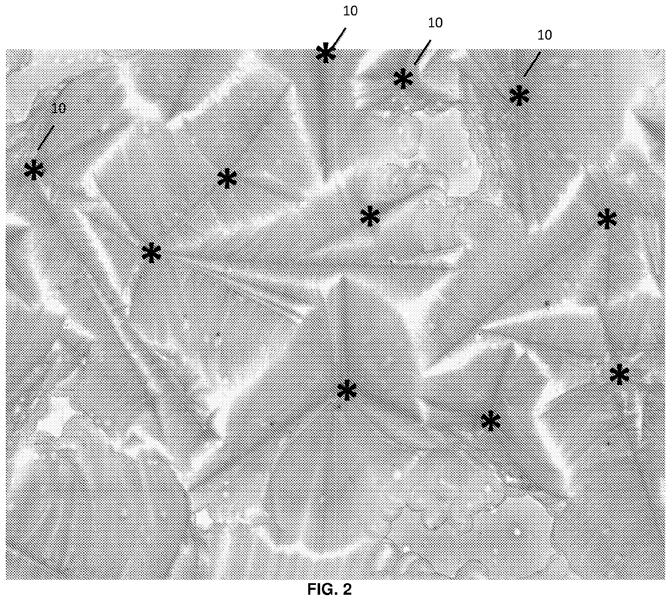

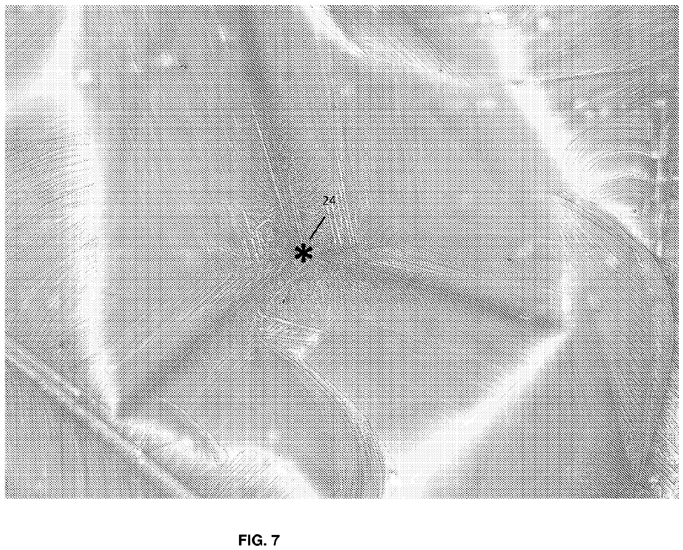

In one embodiment, the transparent conductive framework of the TCMI, that is formed from the crystal growth ink consists of large (10-300 µm) crystalline metal dendritic "flakes". In the center of each "flake" there is a crystal node (Figs. 2, 7). In some embodiments, these "flakes" have polygonal shape. These "flakes" can be tiled or adjoined edge-to-edge, or they can overlap. The "flakes" can be both convex and concave. An example of the arrangement of such "flakes" (i.e. of such conductive framework) is demonstrated on Fig. 1. An example of a single "flake" is shown on Fig. 6.

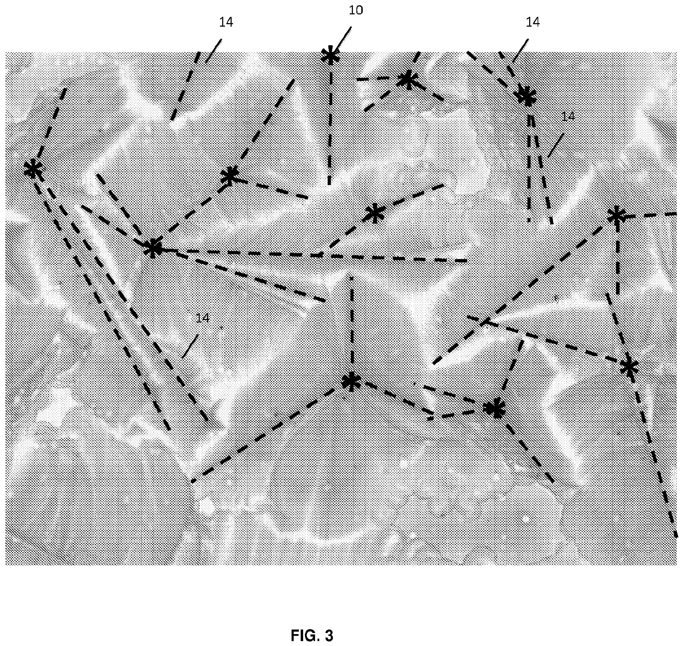

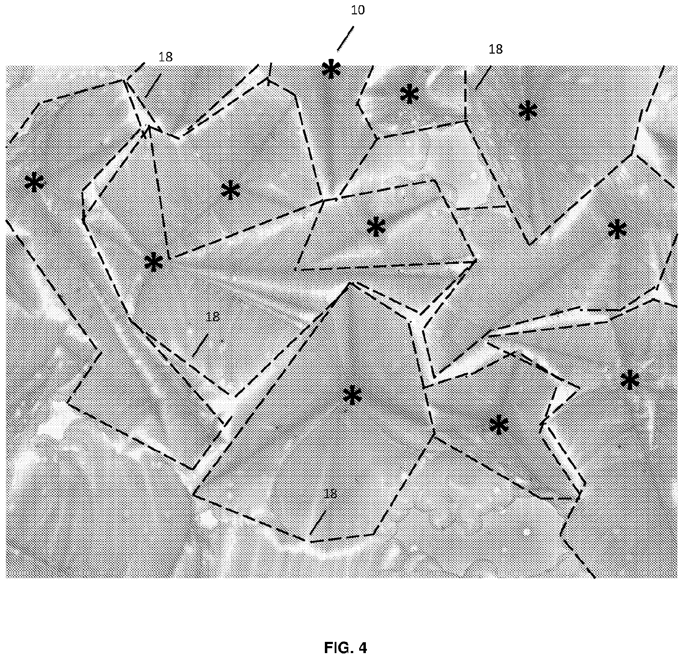

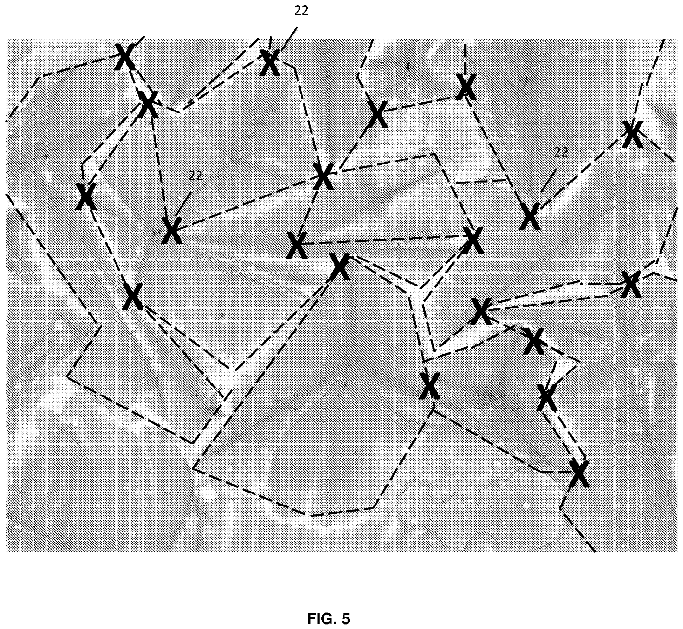

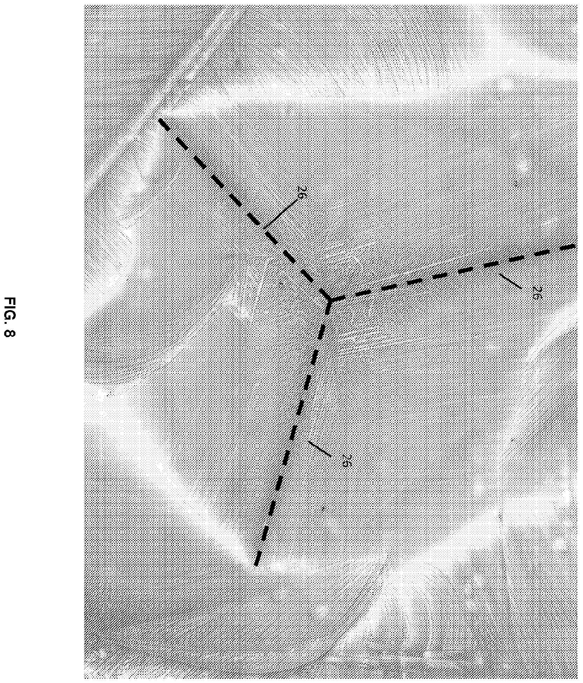

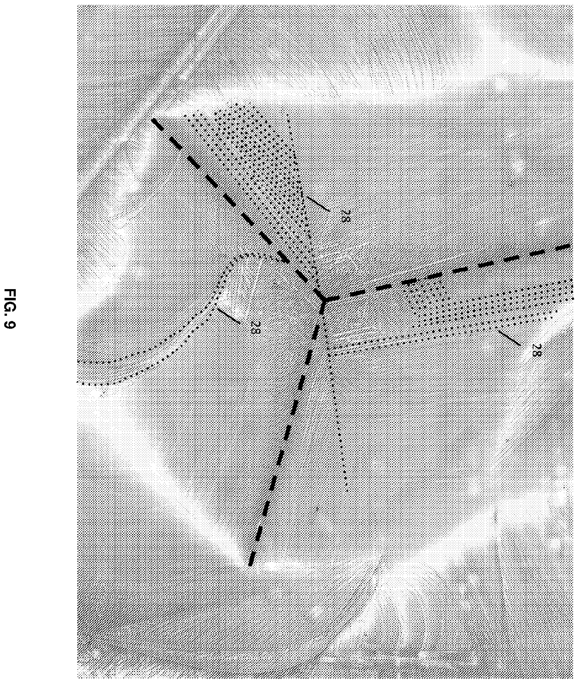

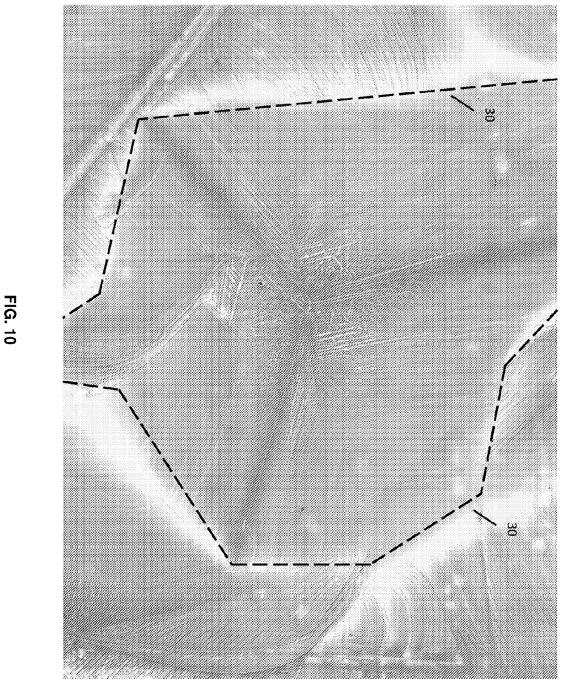

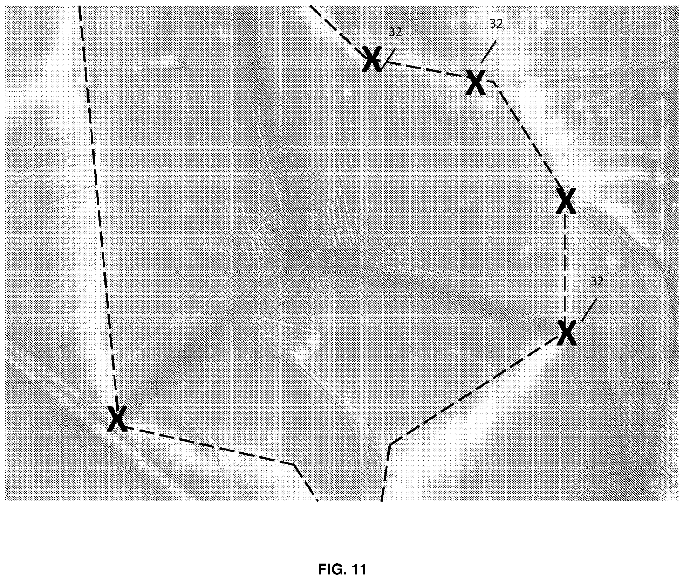

In some embodiments, the "flakes" have a dendritic, multi-branching, snowflake-like shape. In some embodiments, several thicker branches split from the center and spread over the area of the "flake" (see Figs. 3 and 8). Herein they are called "main branches". The main branches branch out by themselves, creating a tree-like dendritic structure. The thinner branches that start not from the nodes or other branches are called "secondary branches". The secondary branches can be straight or curved (Fig. 9). The growth pattern, length and thickness of the main and secondary branches define the shape of the "flake", its borders (Figs. 4, 10) and its intersections with other flakes (Figs. 5, 11). The connection points between the "flakes" contribute to the whole framework's conductivity. The voids between the secondary branches of the "flakes" and the void between the "flakes" themselves contribute to the whole structure's transparency.

Figs. 2 through 5 show different elements of the conductive framework. Stars 10 shown in Fig. 2 represent crystal nodes inside the "flakes". Dashed lines 14 shown in Fig. 3 represent main branches inside the "flakes". Dashed lines 18 on Fig. 4 represent approximate borders of the "flakes". "X" signs 22 on Fig. 5 marks connection points between the "flakes".

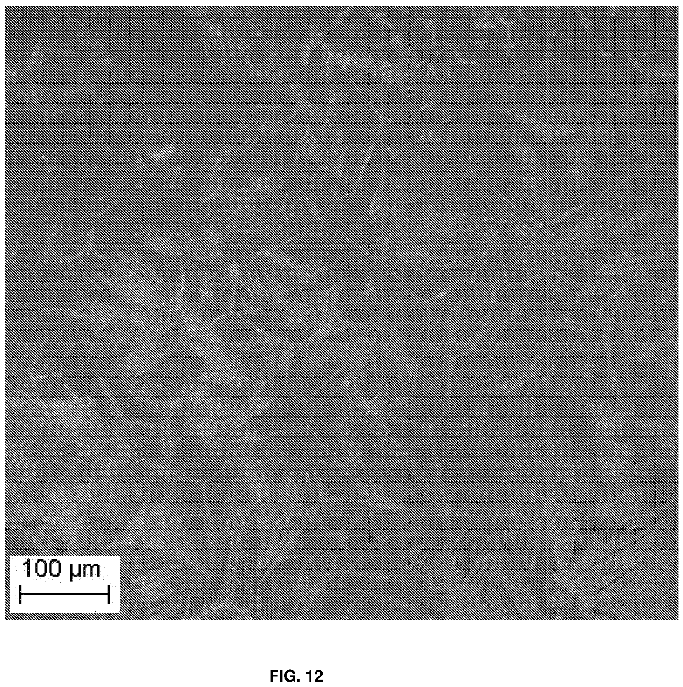

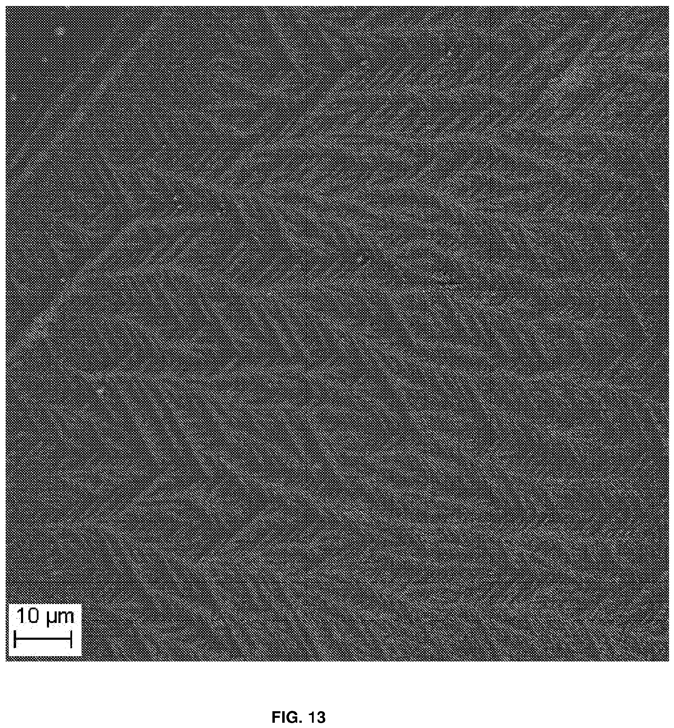

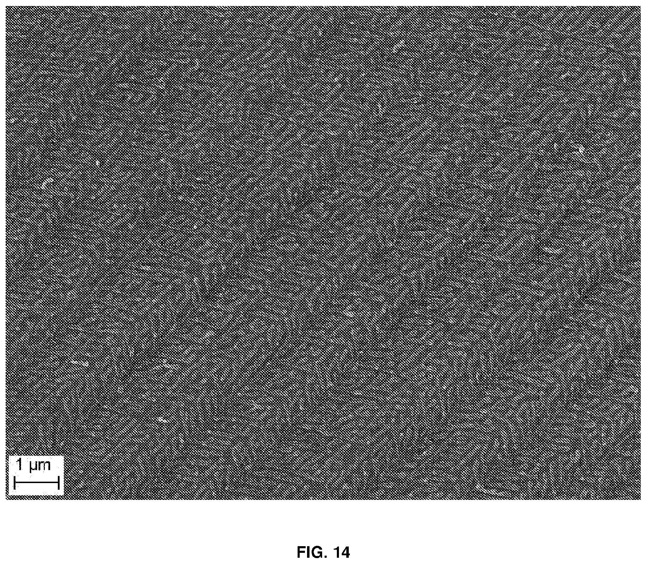

Figs. 7 through 11 show different elements of a single "flake". A star 24 on Fig. 7 represents crystal node inside the "flake". Long dashed lines 26 on Fig. 8 represent main branches inside the "flakes". Dotted lines 28 on Fig. 9 represent some of the secondary branches inside the "flake". Short dashed lines 30 on Fig. 10 represent approximate borders of the "flake". "X" signs 32 on Fig. 11 mark connection points between the central "flake" and the adjacent "flakes". Several "flakes" with thicker main branches are shown on an electron micrograph picture on Fig. 12. Some examples of the tree-like dendritic nature of the main and secondary branches are shown on Figs. 13 and 14.

In some embodiments the "flakes" cannot be identified from the SEM imaging, but the TCML retains its conductivity and transparency properties. An example of such a structure can be found in Figs. 15 and 16. lt can be clearly seen, that this is also as interconnected dendritic structure, not dissimilar to the ones shown above. In some embodiments, while the larger scale flake features (for example, "main branches") remain, as illustrated in Fig. 15, the smaller scale features (for example, "secondary branches") appear to be a randomized interconnected nanocrystal network, as shown in Fig. 16, for example.

In one embodiment, the crystal growth ink composition includes a metal ionic precursor, comprising between 0.01% and 20% by weight of the crystal growth ink. The composition of the crystal growth ink may be in the form of a solution, a dispersion, a suspension, a gel, or a colloid.

In some embodiments the metal ionic precursor of the crystal growth ink may be composed of a mixture of salts including one or more metal cations (i.e., positively charged ions) and counterions (i.e., ions having a charge equal to the cations, but negative). In an embodiment, the metal cations may be stabilized by either a counterion or a ligand, forming an organometallic complex, such that the resulting salt is connected by coordinate bonds rather than by ionic bonds.

In some embodiments the metal cations may be in the form of an organic or inorganic salt of at least one of the following elements: Au, Ag, Pt, Pd, Cu, Ni, Co, Zn, In, Ti, V, Mn, Fe, Cr, Zr, Nb, Mo, W, Ru, Rh, Ca, Re, Os, Ir, Al, Ga, Sn, and Sb, and their combinations. Their salts may form metallic or bimetallic nanocrystals. In some embodiments it may be preferential that the metal cations may be an organic or an inorganic salt of silver (Ag).

In some embodiments the counterions of the metal ionic precursor may be M(NO3)n, M(SO4)n, MCIn, HmMCIn+m, and MN, where "M" is a metal atom, or metal alloy, with a valence of "n", H is hydrogen, NO3 is nitrate, SO4 is sulfate, Cl is chloride, "N" is alkyl-, alyl-, aceto-, carbonyl, carboxyl, cyclopentadienyl, phenyl-, biphenyl-, pyridine-, bipyridine-, aromatic, cyano-, amide and other organic moieties, and "m" is a valence of the counterion.

In some embodiments the crystal growth ink composition includes 80% to 99.99% by weight of the liquid part of the ink that includes a combination of chemical solvents whose purpose is, first, to help spreading and/or printing of the crystal growth ink on the surface, and, second, ensure the proper crystal growth parameters, including but not limited to crystal size, crystal shape, layer roughness, layer flexibility, layer transparency and layer conductivity.

The liquid part of the ink consists of two parts, a structuring liquid, and a spreading liquid. Both of the parts can be one or a combination of several organic solvents. In some embodiments the structuring liquid has a high dynamic viscosity parameter. In some embodiments the structuring liquid has a dynamic viscosity between 20-100 mPa·s (20-100 centipoise (cP)) In some embodiments the spreading liquid has a low surface tension parameter. In some embodiments it is preferential that the structuring liquid may include any one or combination of cyclic alcohols, sulfoxides, formamides, ethylamines, diols, glycols, glycol ethers, glycerol, propylene carbonate, and their derivatives. In some embodiments the spreading liquid has a surface tension of 10-40 millinewtons per meter (mN/m). In some embodiments it is preferential if the spreading liquid is at least one of: alcohol, toluene, dioxane, sulfoxides, formamides, ethylamines, glycol ethers, acetonitrile and their derivatives.

In some embodiments the liquid part of the ink only evaporates during plasma exposure under the combined effect of plasma irradiation and atmospheric pressure to medium vacuum (1×10⁵ Pa to 1×10⁻¹ Pa).

The disclosed method includes applying the crystal growth ink to a substrate by various means including, but not limited to, drop-casting, spray-coating, immersion, inkjet printing, aerosol spraying, slot-die casting, spin-coating and screen printing. In order for the process to work, the thickness of the crystal growth ink on the substrate should not exceed 2 millimeters. The coated substrate is then exposed to irradiation from plasma. The plasma used for the irradiation includes plasma having partially ionized gas that is not in thermodynamic equilibrium, such as radio frequency (RF) plasma. Often, such plasma can exist at relatively low temperatures. Such plasma can be in both low to medium and atmospheric pressure. The use of plasma enables the conduction of a chemical reaction without exposing the surface of the substrate to high temperatures, which may damage or otherwise harm the surface or the layers below the surface of the substrate.

The plasma may include a gas such as Argon, Nitrogen, Oxygen, Hydrogen, air, Helium, Neon, Xenon, Ammonia, Ethane (C2H6), Carbon dioxide, Carbon monoxide, Methane (CH4), Propane (C3H8), Silane (SiH4), Nitrogen dioxide, Nitrogen monoxide and their combinations. In some embodiments it is preferential that the plasma gas is an inert gas. In some embodiments it is preferential that the plasma gas is Argon, Nitrogen, Neon or Xenon. To this end, the substrate is exposed to gas plasma as determined by a set of exposure parameters including, but not limited to, power, RF frequency, and time duration of the exposure. The values of the exposure parameters are determined, based in part, on the type of the substrate, the composition of the crystal growth ink, and the means of the application of the crystal growth ink.

In an embodiment not belonging to the present invention, the values of the exposure parameters fall within the following ranges: the power is up to 3000 Watts (W), the plasma RF frequency is between 50Hz and 5GHz, and the exposure time is between 1 and 3600 seconds. In an embodiment not belonging to the present invention it is preferential if the plasma power is 50-200 W, the plasma RF frequency is between 30 kHz and 20 MHz, and the exposure time is between 5 and 600 seconds. In an embodiment, the plasma frequency is 40 kHz. In another embodiment, the plasma frequency is 13.56 MHz.

As the substrate coated with crystal growth ink is exposed to the plasma, the metal ionic precursor therein reacts with the plasma, resulting in its electrochemical reduction. During the reduction process, the majority (at least 95%) of the liquid part of the ink evaporates, and metal ions receive electrons from the plasma and are converted into metal atoms. These processes occur simultaneously. The metal atoms assemble into a nanocrystalline framework that adheres to the substrate. The density and therefore transparency and conductivity of the framework can be controlled.

In some embodiments, the transparency of the resulting metal films is between 30% and 95% in the wavelength range of about 370 nm to 770 nm. In some embodiments the conductivity of the metal films is between 0.01 ohm/square to 500 ohm/square. In some embodiments the resulting metal films are highly flexible when grown on a flexible substrate, and do not exhibit fatal cracking after 1000 bending cycles.

Following are a few non-limiting examples for printing of transparent conductive films with different conductivity and resistivity parameters.

Example I. The crystal growth ink includes the metal ionic precursor AgNO3 with a concentration of 5 wt. % of the crystal growth ink. The ink is loaded into an Epson printhead. A PET substrate is activated using plasma irradiation for 10 seconds. The substrate is loaded into the printer and a rectangular shape is printed using the crystal growth ink. The PET is then put into a plasma chamber and the chamber is set with the following exposure parameters for power, gas flow rate, and time: RF frequency of 13.56 MHz, 150 W of power, 30 SCCM gas flow rate, and 5 minutes of exposure, respectively. The result is a conductive transparent print. The print resistivity is 4 ohm/sq. The film transparency is 50%. Fig. 2 shows an optical microscope image of similarly prepared transparent conductive film.

Example II (comparative). The crystal growth ink includes the metal ionic precursor AgNO3 with a concentration of 1 wt. % of the crystal growth ink. The ink is loaded into a Konica Minolta printhead. An AS-sized PET substrate is activated using plasma irradiation for 1 minute. The substrate is loaded into the printer and the whole substrate is printed on with the crystal growth ink. The PET is then put into a plasma chamber and the chamber is set with the following exposure parameters for power, gas flow rate, and time: RF frequency of 13.56 MHz, 150 W of power, 20 SCCM gas flow rate, and 5 minutes of exposure, respectively. The result is a conductive transparent print. The print resistivity is 130 ohm/sq. The film transparency is 70%. Fig. 4 shows an electron microscope image of similarly prepared transparent conductive film.

Example III (comparative). The crystal growth ink includes the metal ionic precursor AgNO3 with a concentration of 2.5 wt. % of the crystal growth ink. The ink is loaded into a Dimatix printhead. A PET substrate is cleaned using a piranha solution and dried thoroughly. A rectangular shape is printed with a flatbed printer using the crystal growth ink. The PET is then put into a plasma chamber and the chamber is set with the following exposure parameters for power, gas flow rate, and time: RF frequency of 13.56 MHz, 150 W of power, 30 SCCM gas flow rate, and 5 minutes of exposure, respectively. The result is a conductive transparent print on glass. The print resistivity is 15 ohm/sq. The film transparency is 80%.

Example IV (comparative). The crystal growth ink includes the metal ionic precursor AgNO3 with a concentration of 6 wt. % of the crystal growth ink. The ink is loaded into a Konica printhead. A PET substrate is activated using plasma irradiation for 20 seconds. The substrate is loaded into the printer and a rectangular shape is printed using the crystal growth ink. The PET is then put into a plasma chamber and the chamber is set with the following exposure parameters for power, gas flow rate, and time: RF frequency of 13.56 MHz, 150 W of power, 30 SCCM gas flow rate, and 2 minutes of exposure, respectively. The result is a conductive transparent print. The print resistivity is 4 ohm/sq. The film transparency is 35%.

Example V (comparative). The crystal growth ink includes the metal ionic precursor AgNO3 with a concentration of 10 wt. % of the crystal growth ink. The ink is loaded into a Spectra printhead. A PET substrate is activated using plasma irradiation for 30 seconds. The substrate is loaded into the printer and a rectangular shape is printed using the crystal growth ink. The PET is then put into a plasma chamber and the chamber is set with the following exposure parameters for power, gas flow rate, and time: RF frequency of 13.56 MHz, 150 W of power, 30 SCCM gas flow rate, and 5 minutes of exposure, respectively. The result is a conductive transparent print. The print resistivity is 30 ohm/sq. The film transparency is 60%.

Example VI (comparative). The crystal growth ink includes the metal ionic precursor AgNO3 with a concentration of 0.5 wt. % of the crystal growth ink. A PET substrate is activated using plasma irradiation for 10 seconds. The ink is spread on the PET substrate using an aerosol jet. The PET is then put into a plasma chamber and the chamber is set with the following exposure parameters for power, gas flow rate, and time: RF frequency of 13.56 MHz, 150 W of power, 30 SCCM gas flow rate, and 10 minutes of exposure, respectively. The result is a conductive transparent print. The print resistivity is 20 ohm/sq. The film transparency is 40%.

Example VII. The crystal growth ink includes the metal ionic precursor silver nitrate with a concentration of 3.5 wt. % of the crystal growth ink. The ink is loaded into a Spectra printhead. The PET substrate is loaded into the printer and a rectangular shape is printed using the crystal growth ink. The PET is then put into a plasma chamber and the chamber is set with the following exposure parameters for power, gas flow rate, and time: RF frequency of 40 kHz, 150 W of power, 30 SCCM gas flow rate, and 5 minutes of exposure, respectively. The result is a conductive transparent print. The print resistivity is 15 ohm/sq. The film transparency is 80%. Fig. 15 shows an SEM image of similarly prepared transparent conductive film.

Example VIII (comparative). The crystal growth ink includes the metal ionic precursor silver acetate with a concentration of 13 wt. % of the crystal growth ink. The ink is loaded into a Spectra printhead. An AS-sized PET substrate is activated using plasma irradiation for 1 minute. The PET substrate is loaded into the printer and a rectangular shape is printed using the crystal growth ink. The PET is then put into a plasma chamber and the chamber is set with the following exposure parameters for power, gas flow rate, and time: RF frequency of 13.56 MHz, 200 W of power, 20 SCCM gas flow rate, and 10 minutes of exposure, respectively. The result is a conductive transparent print. The print resistivity is 130 ohm/sq. The film transparency is 70%.

Example IX (comparative). The crystal growth ink includes the metal ionic precursor AuCI4H2 with a concentration of 2.5 wt. % of the crystal growth ink. The ink is loaded into a Konica acid resistant printhead. A PET substrate is cleaned using a piranha solution and dried thoroughly. A rectangular shape is printed with a flatbed printer using the crystal growth ink. The PET is then put into a plasma chamber and the chamber is set with the following exposure parameters for power, gas flow rate, and time: RF frequency of 13.56 MHz, 150 W of power, 30 SCCM gas flow rate, and 10 minutes of exposure, respectively. The result is a conductive transparent print on glass. The print resistivity is 15 ohm/sq. The film transparency is 80%.

Example X (comparative). The crystal growth ink includes the metal ionic precursor AgNO3 with a concentration of 6 wt. % of the crystal growth ink. The liquid part of the ink consists of a combination of ethylene glycol and propylene glycol as a structuring liquid, and a combination of Dowanol PM and propyl cellosolve as a spreading liquid. The ink is loaded into a Spectra printhead. The PET substrate is loaded into the printer and a rectangular shape is printed using the crystal growth ink. The PET is then put into a plasma chamber and the chamber is set with the following exposure parameters for power, gas flow rate, and time: RF frequency of 40 kHz, 200 W of power, 25 SCCM gas flow rate, and 5 minutes of exposure, respectively. The result is a conductive transparent print. The print resistivity is 70 ohm/sq. The film transparency is 85%.

Example XI (comparative). The crystal growth ink includes the metal ionic precursor silver sulphate with a concentration of 1 wt. % of the crystal growth ink. The ink is spread on a substrate using a slot-die coater. The substrate is then put into a plasma chamber and the chamber is set with the following exposure parameters for power, gas flow rate, and time: RF frequency of 13.56 MHz, 150 W of power, 30 SCCM gas flow rate, and 3 minutes of exposure, respectively. The result is a conductive transparent print. The print resistivity is 30 ohm/sq. The film transparency is 60%.

Example XII (comparative). The crystal growth ink includes the metal ionic precursor silver acetate with a concentration of 3 wt. % of the crystal growth ink. A PET substrate is activated using plasma irradiation for 10 seconds. The ink is spread on the PET substrate using a slot-die coater. The PET is then put into a plasma chamber and the chamber is set with the following exposure parameters for power, gas flow rate, and time: RF frequency of 40 kHz MHz, 150 W of power, 30 SCCM gas flow rate, and 10 minutes of exposure, respectively. The result is a conductive transparent print. The print resistivity is 20 ohm/sq. The film transparency is 40%.

As used herein, the phrase "at least one of" followed by a listing of items means that any of the listed items can be utilized individually, or any combination of two or more of the listed items can be utilized. For example, if a system is described as including "at least one of A, B, and C," the system can include A alone; B alone; C alone; A and B in combination; B and C in combination; A and C in combination; or A, B, and C in combination.

## Claims

1. A method for growing a transparent conductive metal layer on a substrate, comprising:
activating the substrate using plasma irradiation for a predetermined amount of time;
applying crystal growth ink to a surface of the substrate, wherein the crystal growth ink includes a metal ionic precursor;
exposing the substrate to plasma irradiation to cause the growing of the transparent conductive metal layer comprised of a crystalline metal framework on the substrate, wherein the exposure is based on a set of predefined exposure parameters;
wherein the substrate is a PET substrate;
wherein the crystal growth ink comprises a structuring liquid component and a spreading liquid component, both of which are an organic solvent or a combination of organic solvents; and wherein either:
i) the set of predefined exposure parameters comprises RF frequency of 13.56 MHz, 150 W of power, and 30 SCCM gas flow rate, wherein the metal ionic precursor is silver nitrate with a concentration of 5 wt. % of the crystal growth ink, wherein the formed conductive metal layer has a resistivity of 4 ohm/sq and transparency of 50%, and wherein the crystalline metal framework comprises large crystalline metal dendritic flakes each having a crystal node in the center;
or
ii) the set of predefined exposure parameters comprises RF frequency of 40 kHz, 150 W of power, and 30 SCCM gas flow rate; wherein the metal ionic precursor is silver nitrate with a concentration of 3.5 wt. % of the crystal growth ink; wherein the formed conductive metal layer has a resistivity of 15 ohm/sq and transparency of 80%; and wherein the crystalline metal framework comprises a randomized interconnected network of metal nanocrystals.

2. The method of claim 1, wherein the crystal growth ink comprises the metal ionic precursor at a concentration between 0.01% and 20% by weight of the crystal growth ink, and wherein the crystal growth ink is any one of: a solution, a dispersion, a suspension, a gel, and a colloid.

3. The method of claim 1, wherein the metal ionic precursor comprises a mixture of salts including one or more metal cations and counterions.

4. The method of claim 3, wherein the metal cations are stabilized by any one of a counterion and a ligand, wherein the stabilized metal cations form an organometallic complex, such that the resulting salt is connected by coordinate bonds rather than by ionic bonds.

5. The method of claim 3, wherein the metal cations are an organic or an inorganic salt of Ag.

6. The method of claim 3, wherein the metal cations are an organic or inorganic salt of at least one of: Au, Pt, Pd, Cu, Ni, Co, Zn, In, Ti, V, Mn, Fe, Cr, Zr, Nb, Mo, W, Ru, Rh, Ca, Re, Os, Ir, Al, Ga, Sn, Sb, and combination thereof.

7. The method of claim 3, wherein the counterions of the metal ionic precursor are selected from the group consisting of: M(NO3)n, M(SO4)n, MCln, HmMCln+m, and MN, where "M" is a metal atom, or metal alloy, with a valence of "n", H is hydrogen, NO3 is nitrate, SO4 is sulfate, Cl is chloride, "N" is alkyl-, alyl-, aceto-, carbonyl, carboxyl, cyclopentadienyl, phenyl-, biphenyl-, pyridine-, bipyridine-, aromatic, cyano-, amide and other organic moieties, and "m" is a valence of the counterion.

8. The method of claim 1, wherein the crystal growth ink comprises one or more solvents at a concentration between 80% and 99.99% by weight of the liquid part of the ink.

9. The method of claim 1, wherein the structuring liquid component has a dynamic viscosity parameter between 20 and 100 mPa·s (20 and 100 centipoise (cP)).

10. The method of claim 1, wherein the structuring liquid component comprises any one or combination of: cyclic alcohols, sulfoxides, formamides, ethylamines, diols, glycols, glycol ethers, glycerol, propylene carbonate, and their derivatives.

11. The method of claim 1, wherein the spreading liquid component has a surface tension between 10 and 40 millinewtons per meter (mN/m).

12. The method of claim 1, wherein the set of predefined exposure parameters further comprises an exposure to plasma at a pressure ranging from atmospheric of 1×10^5 Pa to medium vacuum of 1×10^-1 Pa.

13. A transparent conductive metal film grown on a substrate using the method of claim 1 with either i) or ii).

## Patentansprüche

1. Verfahren zum Anwachsen einer transparenten leitfähigen Metallschicht auf einem Substrat, umfassend:
Aktivieren des Substrats unter Verwendung von Plasmabestrahlung für eine vorbestimmte Zeitspanne;
Aufbringen von Kristallwachstumstinte auf eine Oberfläche des Substrats, wobei die Kristallwachstumstinte einen metallionischen Präkursor beinhaltet;
Aussetzen des Substrats einer Plasmabestrahlung, um das Anwachsen der transparenten leitfähigen Metallschicht, die ein kristallines Metallgerüst umfasst, auf dem Substrat zu bewirken, wobei das Aussetzen auf einem Satz von vordefinierten Aussetzungsparametern basiert;
wobei das Substrat ein PET-Substrat ist;
wobei die Kristallwachstumstinte eine strukturierende flüssige Komponente und eine verteilende flüssige Komponente umfasst, welche beide ein organisches Lösungsmittel oder eine Kombination von organischen Lösungsmitteln sind; und wobei entweder:
i) der Satz von vordefinierten Aussetzungsparametern eine RF-Frequenz von 13,56 MHz, 150 W Leistung und eine Gasflussrate von 30 SCCM umfasst, wobei der metallionische Präkursor Silbernitrat mit einer Konzentration von 5 Gew.-% der Kristallwachstumstinte ist, wobei die gebildete leitfähige Metallschicht einen spezifischen Widerstand von 4 Ohm/Quadrat und eine Transparenz von 50 % aufweist, und wobei das kristalline Metallgerüst große kristalline Metalldendritenflocken umfasst, die jeweils einen Kristallknoten in der Mitte aufweisen;
oder
ii) der Satz an vordefinierten Aussetzungsparametern eine RF-Frequenz von 40 kHz, 150 W Leistung und eine Gasflussrate von 30 SCCM umfasst; wobei der metallionische Präkursor Silbernitrat mit einer Konzentration von 3,5 Gew.-% der Kristallwachstumstinte ist; wobei die gebildete leitfähige Metallschicht einen spezifischen Widerstand von 15 Ohm/Quadrat und eine Transparenz von 80% aufweist; und wobei das kristalline Metallgerüst ein randomisiertes, miteinander verbundenes Netzwerk von Metallnanokristallen umfasst.

2. Verfahren nach Anspruch 1, bei welchem die Kristallwachstumstinte den metallionischen Präkursor in einer Konzentration zwischen 0,01 und 20 Gew.-% der Kristallwachstumstinte umfasst, und wobei die Kristallwachstumstinte eine der folgenden ist: eine Lösung, eine Dispersion, eine Suspension, ein Gel und ein Kolloid.

3. Verfahren nach Anspruch 1, bei welchem der metallionische Präkursor eine Mischung von Salzen umfasst, beinhaltend ein oder mehrere Metallkationen und Gegenionen.

4. Verfahren nach Anspruch 3, bei welchem die Metallkationen durch ein beliebiges von einem Gegenion oder einem Liganden stabilisiert sind/werden, wobei die stabilisierten Metallkationen einen organometallischen Komplex bilden, so dass das resultierende Salz durch koordinative Bindungen anstatt durch ionische Bindungen verbunden ist/wird.

5. Verfahren nach Anspruch 3, bei welchem die Metallkationen ein organisches oder anorganisches Salz von Ag sind.

6. Verfahren nach Anspruch 3, bei welchem die Metallkationen ein organisches oder anorganisches Salz von mindestens einem der folgenden sind: Au, Pt, Pd, Cu, Ni, Co, Zn, In, Ti, V, Mn, Fe, Cr, Zr, Nb, Mo, W, Ru, Rh, Ca, Re, Os, Ir, Al, Ga, Sn, Sb und einer Kombination hiervon.

7. Verfahren nach Anspruch 3, bei welchem die Gegenionen des metallionischen Präkursors ausgewählt sind/werden aus der Gruppe bestehend aus: M(NO3)n, M(SO4)n, MCln, HmMCln+m und MN, bei welchem "M" ein Metallatom oder eine Metalllegierung mit einer Valenz von "n" ist, H Wasserstoff ist, NO3 Nitrat ist, SO4 Sulfat ist, Cl Chlorid ist, "N" Alkyl-, Alyl-, Aceto-, Carbonyl-, Carboxyl-, Cyclopentadienyl-, Phenyl-, Biphenyl-, Pyridin-, Bipyridin-, aromatische, Cyano-, Amid- und anderer organischer Reste und "m" die Wertigkeit des Gegenions ist.

8. Verfahren nach Anspruch 1, bei welchem die Kristallwachstumstinte ein oder mehrere Lösungsmittel in einer Konzentration zwischen 80 und 99,99 Gew.-% des flüssigen Teils der Tinte umfasst.

9. Verfahren nach Anspruch 1, bei welchem die strukturierende flüssige Komponente einen dynamischen Viskositätsparameter zwischen 20 und 100 mPa·s (20 und 100 Centipoise (cP)) aufweist.

10. Verfahren nach Anspruch 1, bei welchem die strukturierende flüssige Komponente eines oder eine Kombination der folgenden umfasst: zyklische Alkohole, Sulfoxide, Formamide, Ethylamine, Diolenen, Glycolen, Glycolethern, Glycerin, Propylencarbonat und deren Derivaten.

11. Verfahren nach Anspruch 1, bei welchem die verteilende flüssige Komponente eine Oberflächenspannung zwischen 10 und 40 Millinewton pro Meter (mN/m) aufweist.

12. Verfahren nach Anspruch 1, bei welchem der Satz an vordefinierten Aussetzungsparametern ferner ein Aussetzen gegenüber Plasma bei einem Druck im Bereich von atmosphärisch 1×10^5 Pa bis zu einem mittleren Vakuum von 1×10^-1 Pa umfasst.

13. Transparenter leitfähiger Metallfilm, der auf einem Substrat unter Verwendung des Verfahrens Anspruch 1 mit entweder i) oder ii) angewachsen ist.

## Revendications

1. Procédé de croissance d'une couche métallique conductrice transparente sur un substrat, comprenant :
activer le substrat en utilisant une irradiation plasma pendant une durée prédéterminée ;
appliquer une encre de croissance cristalline sur une surface du substrat, l'encre de croissance cristalline comprenant un précurseur ionique métallique ;
exposer le substrat à l'irradiation plasma pour entraîner la croissance de la couche métallique conductrice transparente composée d'une structure métallique cristalline sur le substrat, dans lequel l'exposition est basée sur un ensemble de paramètres d'exposition prédéfinis ;
dans lequel le substrat est un substrat PET ;
dans lequel l'encre de croissance cristalline comprend un composant liquide de structuration et un composant liquide d'étalement, tous deux étant un solvant organique ou
une combinaison de solvants organiques ; et dans lequel soit :
i) l'ensemble de paramètres d'exposition prédéfinis comprend une fréquence RF de 13,56 MHz, une puissance de 150 W et un débit de gaz de 30 SCCM, dans lequel le précurseur ionique métallique est le nitrate d'argent avec une concentration de 5 % en poids de l'encre de croissance cristalline, dans lequel la couche métallique conductrice formée a une résistivité de 4 ohm/sq / ohm/carré et une transparence de 50 %, et dans lequel la structure métallique cristalline comprend de larges flocons dendritiques métalliques cristallins ayant chacun un noeud cristallin en leur centre ;
soit
ii) l'ensemble de paramètres d'exposition prédéfinis comprend une fréquence RF de 40 kHz, une puissance de 150 W et un débit de gaz de 30 SCCM; dans lequel le précurseur ionique métallique est le nitrate d'argent à une concentration de 3,5 % en poids de l'encre de croissance cristalline; dans lequel la couche métallique conductrice formée a une résistivité de 15 ohm/sq / ohm/carré et une transparence de 80 % ; et dans lequel la structure métallique cristalline comprend un réseau interconnecté aléatoire de nanocristaux métalliques.

2. Procédé selon la revendication 1, dans lequel l'encre de croissance cristalline comprend le précurseur ionique métallique à une concentration comprise entre 0,01% et 20% en poids de l'encre de croissance cristalline, et dans lequel l'encre de croissance cristalline est une parmi une solution, une dispersion, une suspension, un gel ou un colloïde.

3. Procédé selon la revendication 1, dans lequel le précurseur ionique métallique comprend un mélange de sels incluant un ou plusieurs cations métalliques et contre-ions.

4. Procédé selon la revendication 3, dans lequel les cations métalliques sont stabilisés par un parmi un contre-ion ou un ligand, dans lequel les cations métalliques stabilisés forment un complexe organométallique, de sorte que le sel résultant est lié par liaisons de coordination plutôt que par liaisons ioniques.

5. Procédé selon la revendication 3, dans lequel les cations métalliques sont un sel organique ou un sel inorganique d'Ag.

6. Procédé selon la revendication 3, dans lequel les cations métalliques sont un sel organique ou un sel inorganique parmi au moins un des éléments suivants : Au, Pt, Pd, Cu, Ni, Co, Zn, In, Ti, V, Mn, Fe, Cr, Zr, Nb, Mo, W, Ru, Rh, Ca, Re, Os, Ir, Al, Ga, Sn, Sb, et leur combinaison.

7. Procédé selon la revendication 3, dans lequel les contre-ions du précurseur ionique métallique sont choisis dans le groupe constitué de : M(NO3)n, M(SO4)n, MCln, HmMCln+m, et MN, où "M" est un atome de métal, ou un alliage métallique, avec une valence de "n", H est l'hydrogène, NO3 est un nitrate, SO4 est un sulfate, Cl est un chlorure, "N" est un alkyl-, un alyl-, un acéto-, un carbonyle, un carboxyle, un cyclopentadiényle, un phényle, un biphényle, une pyridine, une bipyridine, un aromatique, un cyano, une amide et autres groupements organiques, et "m" une valence du contre-ion.

8. Procédé selon la revendication 1, dans lequel l'encre de croissance cristalline comprend un ou plusieurs solvants à une concentration comprise entre 80 % et 99,99 % en poids de la partie liquide de l'encre.

9. Procédé selon la revendication 1, dans lequel le composant liquide de structuration a un paramètre de viscosité dynamique compris entre 20 et 100 mPa.s (20 et 100 centipoises (cP)).

10. Procédé selon la revendication 1, dans lequel le composant liquide de structuration comprend un ou une combinaison parmi: alcools cycliques, sulfoxydes, formamides, éthylamines, diols, glycols, éthers de glycol, glycérol, carbonate de propylène, et leurs dérivés.

11. Procédé selon la revendication 1, dans lequel le composant liquide d'étalement a une tension superficielle entre 10 et 40 millinewtons par mètre (mN/m).

12. Procédé selon la revendication 1, dans lequel l'ensemble de paramètres d'exposition prédéfinis comprend en outre une exposition au plasma à une pression allant de la pression atmosphérique de 1×10^5 Pa au vide moyen de 1×10^-1 Pa.

13. Film métallique conducteur transparent mis à croître sur un substrat en utilisant le procédé de la revendication 1 avec i) ou ii).
